(19) Europäisches Patentamt
European Patent Office
Office européen des brevets

(11) Publication number: **0 308 177 B1**

(12) # EUROPEAN PATENT SPECIFICATION

(45) Date of publication of patent specification: **22.07.92**

(51) Int. Cl.5: **C08F 10/00**, C08F 4/622

(21) Application number: **88308456.8**

(22) Date of filing: **13.09.88**

(54) **Method for preparing an active metallocene-alumoxane catalyst in situ during polymerization.**

(30) Priority: **14.09.87 US 96088**

(43) Date of publication of application:
**22.03.89 Bulletin 89/12**

(45) Publication of the grant of the patent:
**22.07.92 Bulletin 92/30**

(84) Designated Contracting States:
**AT BE DE ES FR GB IT LU NL SE**

(56) References cited:
**EP-A- 245 482**
**EP-A- 0 037 894**
**DE-A- 3 240 382**
**EP-A- 295 312**
**DE-A- 2 608 863**
**FR-A- 1 173 577**

(73) Proprietor: **EXXON CHEMICAL PATENTS INC.**
**200 Park Avenue**
**Florham Park New Jersey 07932(US)**

(72) Inventor: **Chang, Main**
**15910 Dunmoor Drive**
**Houston, TX 77059(US)**

(74) Representative: **Veldhuizen, Albert Dirk Willem et al**
**Exxon Chemical Limited Exxon Chemical Technology Centre PO Box 1**
**Abingdon Oxfordshire OX13 6BB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 308 177 B1

## Description

This invention relates to a process for polymerizing olefins wherein a catalytic precursor composition on a support is safely rendered catalytically active by exposure to water vapor contained in a monomer feed stock. The invention particularly relates to the polymerization of ethylene in the presence or absence of other alpha-olefin comonomers, wherein the catalytically active composition comprises a metallocene and an alumoxane on a support, the alumoxane component being formed in situ by exposure of an aluminum alkyl to water vapor contained in a monomer feed stock supplied to the polymerization reaction vessel.

### Background to the Invention

Olefin polymerization catalysts comprising a metallocene and an aluminum alkyl component were first proposed in about 1956. Australian patent 220436 proposed for use as a polymerization catalyst a bis-(cyclopentadienyl) titanium, zirconium, or vanadium salt as reacted with a variety of halogenated or unhalogenated aluminum alkyl compounds. Although such complexes were capable of catalyzing the polymerization of ethylene, such catalytic complexes, especially those made by reaction with an aluminum trialkyl, had an insufficient level of catalytic activity to be employed commercially for production of polyethylene or copolymers of ethylene.

In U.S. Patent 3,051,690, there is described a catalytic process for polymerizing olefins to high molecular weight polyolefins of controlled molecular weight by the addition of controlled amounts of hydrogen to the polymerization system. The catalyst by which such polymerization is carried out comprises a reaction product of a compound of a metal of Group IVB, VB, VIB, and VIII with an organometallic compound of an alkali metal, alkaline earth metal, zinc, earth metal or rare earth metal. The patent teaches that an increased use of hydrogen during the polymerization process results in a decrease in the molecular weight of the resulting polymer.

More activity forms of metallocenes and aluminum alkyl catalysts have been found, but to exercise control over the molecular weight of the resulting polymer the most expedient control has been the addition during polymerization of hydrogen or other molecular weight modifier.

It has been found that certain metallocenes such as bis-(cyclopentadienyl) titanium, or zirconium dialkyls in combination with aluminum alkyl/water cocatalyst form catalyst systems for the polymerization of ethylene. Such catalysts are discussed in German Patent Application 2,608,863 which discloses a polymerization catalyst for ethylene consisting of bis-(cyclopentadienyl) titanium dialkyl, aluminum trialkyl and water. German patent Application 2,608,933 discloses an ethylene polymerization catalyst consisting of a cyclopentadienyl zirconium salt, an aluminum trialkyl cocatalyst and water. European Patent Application No. 0035242 discloses a process for preparing ethylene and atactic propylene polymers in the presence of a halogen free cyclopentadienyl transition metal salt and an alumoxane. Such catalysts have sufficient activity to be commercially useful and enable the control of molecular weight by means other than hydrogen addition -- such as by controlling the reaction temperature or by controlling the amount of alumoxane as such or as produced by the reaction of water with an aluminum alkyl. The reaction of an aluminum alkyl with water is a very rapid and highly exothermic one. Because of the extreme violence of the reaction the alumoxane cocatalyst component has, heretofore, been made by one of two general methods. Alumoxanes may be prepared by adding an extremely finely divided water, such as in the form of a humid solvent, to a solution of aluminum alkyl in benzene or other aliphatic hydrocarbons. The production of an alumoxane by such procedures requires use of explosion-proof equipment and very close control of the reaction conditions in order to reduce potential fire and explosion hazards. For this reason, heretofore it has been preferred to produce the alumoxane by reacting an aluminum alkyl with a hydrated salt, such as hydrated copper sulfate. In such procedure a slurry of finely divided copper sulfate pentahydrate and toluene is formed and mantled under an inert gas. Aluminum alkyl is then slowly added to the slurry with stirring and the reaction mixture is maintained at room temperature for 24 to 48 hours during which a slow hydrolysis occurs by which the alumoxane is produced. Although the production of alumoxane by a hydrated salt method significantly reduces the explosion and fire hazard inherent in the wet solvent production method, production of an alumoxane by reaction with a hydrated salt must be carried out as a separate process, is slow, produces hazardous wastes that create disposal problems, and cannot be used for the production of the active catalyst complex in situ in the polymerization vessel because the hydrated salt reagent would become entrained in and contaminate any polymer produced therein.

Only in those situations wherein a hydrated material is of a chemical composition acceptable as a filler material for a filled polyolefin composition may it be used to produce a metallocene/alumoxane catalyst complex in situ as a feature of the polymerization process. Hence U. S. Patent 4,431,788 discloses a

process for producing a starch filled polyolefin composition wherein an aluminum trialkyl is first reacted with a starch of a moisture content below 7 weight percent, which is then treated with a (cyclopentadienyl)-chromium, titanium, vanadium or zirconium alkyl to form a metallocene type catalyst complex on the starch surface. An olefin is then polymerized about the starch particles to form a free-flowing composition of polyolefin-coated starch particles. German Patent 3,240,382 likewise discloses a method for producing a filled polyolefin composition which utilizes the water content of the filler material to produce thereon an active metallocene type catalyst complex. Polymer is produced at the filler surface to uniformly coat the filler particles.

FR 1173577 discloses a titaniumchloride/aluminum alkyl based non-supported catalyst system where water in a feed stream is used to reduce molecular weight and increase the polymerization rate in the production of a polymer in a saturated aliphatic hydrocarbon dispersant.

It would be desirable to devise an economical procedure whereby an active metallocene/alumoxane catalyst species could be safely produced in situ in the polymerization reaction vessel from a catalyst precursor composition of metallocene and aluminum alkyl which procedure is free of the dangers or limitation attendant with the methods heretofore known for the production of such types of catalyst.

## Summary of the Invention

The present invention provides a process for preparing polymers of ethylene, propylene, or copolymers of ethylene and alpha olefins, by polymerization of a monomer feed in a reaction vessel in the presence of a metallocene-alumoxane catalyst composition which is prepared in situ in said reaction vessel, comprising the steps of : (a) supplying said reaction vessel with an aluminum alkyl and a metallocene as a deposit on a catalyst support in amounts appropriate to form, upon exposure of the aluminum alkyl to water, a metallocene-alumoxane catalyst; and (b) supplying said reaction vessel with the monomer feed preferably gaseous containing from 100 to 10,000 ppm water vapor at a molar ratio of aluminum alkyl to water of from 1 to 2.

By the process of this invention the active catalyst complex may be prepared in the form of a heterogenous catalyst on a catalyst support for use in slurry or gas phase polymerization.

A heterogeneous catalyst is prepared by first codepositing the requisite quantities of an aluminum alkyl and a metallocene from solution by adsorption on a high surface area catalyst support material, such as silica gel, and thereafter exposing the supported catalyst precursor composition to a gaseous monomer supply stream containing entrained water in amounts from 100 to 10,000 ppm and preferably 1000-8000 ppm to convert said aluminum alkyl to an alumoxane for formation of the active catalyst complex. When the heterogeneous catalyst is to be used for slurry polymerization the solvent for the codeposition technique may be one suitable for slurry polymerization. In that case, the solvent need not be evacuated and slurry polymerization can be commenced by supplying to the reaction vessel a monomer feed stream containing entrained water. When the heterogeneous catalyst is to be employed for gas phase polymerization, the codeposition solvent is evacuated and the catalyst support material containing the adsorbed catalyst precursor composition is dried to a free flowing powder which may then be used in accordance with standard gas phase polymerization techniques with a monomer feed stream containing entrained water which converts the supported precursor composition to the active catalyst complex.

## Detailed Description of the Preferred Embodiments

The present invention is directed towards a method for preparing catalyst systems and a catalytic process for the polymerization of particular olefins, and particularly ethylene to high molecular weight polyethylenes such as linear low density polyethylene (LLDPE) and high density polyethylene (HDPE). The polymers are intended for fabrication into articles by extrusion, injection molding, thermoforming, rotational molding, and the like. In particular, the polymers prepared by the method of this invention are homopolymers of ethylene and copolymers of ethylene with higher alpha-olefins having from 3 to 10 carbon atoms and preferably 4 to 8 carbon atoms. Illustrative of the higher alpha-olefins are butene-1, hexene-1, and octene-1.

In the process of the present invention, ethylene, either alone or together with alpha-olefins having three or more carbon atoms, is polymerized in the presence of a catalyst system comprising at least one metallocene and an alumoxane.

In accordance with this invention, one can also produce olefin copolymers, particularly copolymers of ethylene and higher alpha-olefins having from 3-18 carbon atoms.

The active catalyst complex prepared by the process of this invention comprises a metallocene and an

alumoxane on a support. Alumoxanes are polymeric aluminum compounds which can be represented by the general formula $(R\text{-}Al\text{-}O)_y$ which is believed to be a cyclic compound and $R(R\text{-}Al\text{-}O\text{-})_yAlR_2$, which is a linear compound. In the general formula, "R" is a $C_1$-$C_5$ alkyl group such as, for example, methyl, ethyl, propyl, butyl, and pentyl and "y" is an integer from 2 to 30. Preferably, "R" is methyl and "y" is from 4 to 25 and most preferably 6-25. Generally, in the preparation of alumoxanes from, for example, aluminum trimethyl and water, a mixture of linear and cyclic compounds is obtained.

The metallocene may be any of the organometallic coordination compounds obtained as a cyclopentadienyl derivative of a transition metal. Metallocenes which are useful for preparing an active catalytic complex according to the process of this invention are the mono, bi and tri cyclopentadienyl or substituted cyclopentadienyl metal compounds and most preferably, bi-cyclopentadienyl compounds. The metallocenes particularly useful in this invention are represented by the general formulas:

I. $(Cp)_mMR_nX_q$

wherein Cp is a cyclopentadienyl ring, M is a Group 4b or 5b transition metal and preferably a Group 4b transition metal, R is a hydrocarbyl group or hydrocarboxy group having from 1 to 20 carbon atoms, X is a halogen, and m is a whole number from 1 to 3, n is a whole number form 0 to 3, and q is a whole number from 0 to 3,

II. $(C_5R'_k)_gR''_s(C_5R'_k)MQ_{3-g}$, and

III. $R''_s(C_5R'_k)_2MQ'$

wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radicals containing from 1 to 20 carbon atoms, a silicon-containing hydrocarbyl radical, or a hydrocarbyl radical wherein two carbon atoms are joined together to form a $C_4$-$C_6$ ring, R" is $C_1$-$C_4$ alkylene radical, a dialkyl germanium or silicone, or an alkyl phosphine or amine radical bridging two $(C_5R'_k)$ rings, Q is a hydrocarbyl radical such as aryl, alkyl, alkenyl, alkylaryl, or arylalkyl having 1-20 carbon atoms, hydrocarboxy radical having 1-20 carbon atoms or halogen and can be the same or different, Q' is an alkylidene radical having from 1 to 20 carbon atoms, s is 0 or 1, g is 0, 1 or 2; when g is 0, s is 0; k is 4 when s is 1 and k is 5 when s is 0 and M is as defined above.

Exemplary hydrocarbyl radicals are methyl, ethyl, propyl, butyl, amyl, isoamyl, hexyl, isobutyl, heptyl, octyl, nonyl, decyl, cetyl, 2-ethylhexyl or phenyl. Exemplary alkylene radicals are methylene, ethylene or propylene. Exemplary halogen atoms include chlorine, bromine and iodine and of these halogen atoms, chlorine is preferred. Exemplary of the alkylidene radicals is methylidene, ethylidene and propylidene.

Of the metallocenes, zirconocenes and titanocenes are most preferred. Illustrative but non-limiting examples of these metallocenes which can be usefully employed in accordance with this invention are monocyclopentadienyl titanocenes such as, cyclopentadienyl titanium trichloride, pentamethylcyclopentadienyl titanium trichloride; bis(cyclopentadienyl) titanium diphenyl; the carbene represented by the formula $Cp_2Ti=CH_2 \cdot Al(CH_3)_2Cl$ and derivatives of this reagent such as $Cp_2Ti=CH_2 \cdot Al(CH_3)_3$, $(Cp_2TiCH_2)_2$,

$$Cp_2\overline{TiCH_2CH(CH_3)CH_2},$$

$Cp_2Ti=CHCH_2CH_2$, $Cp_2Ti=CH_2 \cdot AlR'''_2Cl$, wherein Cp is a cyclopentadienyl or substituted cylopentadienyl radical, and R''' is an alkyl, aryl, or alkylaryl radical having from 1-18 carbon atoms; substituted bis(Cp)Ti(IV) compounds such as bis(indenyl)Ti diphenyl or dichloride, bis(methylcyclopentadienyl)Ti diphenyl or dihalides and other dihalide complexes; dialkyl, trialkyl, tetra-alkyl and penta-alkyl cyclopentadienyl titanium compounds such as bis(1,2-dimethylcyclopentadienyl)Ti diphenyl or dichloride, bis(1,2-diethylcyclopentadienyl)Ti diphenyl or dichloride and other dihalide complexes; silicone, phosphine, amine or carbon bridged cyclopentadiene complexes, such as dimethyl silyldicyclopentadienyl titanium diphenyl or dichloride, methylenedicyclopentadienyl titanium diphenyl or dichloride and other dihalide complexes.

Illustrative but non-limiting examples of the zirconocenes which can be usefully employed in accordance with this invention are, cyclopentadienyl zirconium trichloride, pentamethylcyclopentadienyl zirconium trichloride, bis(cyclopentadienyl)zirconium diphenyl, bis(cyclopentadienyl)zirconium dichloride, the alkyl substituted cyclopentadienes, such as bis(ethyl cyclopentadienyl)zirconium dimethyl, bis($\beta$-phenylpropylcyclopentadienyl)zirconium dimethyl, bis(methylcyclopentadienyl)zirconium dimethyl, and dihalide complexes of the above; di-alkyl, tri-alkyl, tetra-alkyl, and penta-alkyl cyclopentadienes, such as bis-(pentamethylcyclopentadienyl)zirconium dimethyl, bis(1,2-dimethylcyclopentadienyl)zirconium dimethyl, bis-(1,3-diethylcyclopentadienyl)zirconium dimethyl and dihalide complexes of the above; silicone, phosphorus, and carbon bridged cyclopentadiene complexes such as dimethylsilyldicyclopentadienyl zirconium dimethyl or dihalide, methylphosphine dicyclopentadienyl zirconium dimethyl or dihalide, and methylene dicyclopentadienyl zirconium dimethyl or dihalide, carbenes represented by the formulae $Cp_2Zr=CH_2P(C_6H_5)_2CH_3$, and derivatives of these compounds such as

$$Cp_2\overline{ZrCH_2CH(CH_3)CH_2}.$$

Bis(cyclopentadienyl)hafnium dichloride, bis(cyclopentadienyl)hafnium dimethyl, or bis-(cyclopentadienyl)vanadium dichloride are illustrative of other metallocenes.

One procedure heretofore employed for preparing the alumoxane separately is that of contacting water in the form of a moist solvent with a solution of aluminum trialkyl in a suitable organic solvent such as benzene or aliphatic hydrocarbon. As before noted this procedure is attendant with fire and explosion hazards which requires the use of explosion-proof equipment and carefully controlled reaction conditions. In an alternative method heretofore employed for the separate production of alumoxane, an aluminum alkyl is contacted with a hydrated salt, such as hydrated copper sulfate. The method comprised treating a dilute solution of aluminum alkyl in, for example, toluene, with a copper sulfate pentahydrate. A slow, controlled hydrolysis of the aluminum alkyl to alumoxane resulted which substantially eliminated the fire and explosion hazard but with the disadvantage of the creation of hazardous waste products that must be disposed of and from which the alumoxane must be separated before it is suitable for use in the production of an active catalyst complex. The procedures heretofore employed were expensive, time-consuming, potentially dangerous, and were not suitable to the production of an active catalyst species from a metallocene and aluminum alkyl composition in situ in the polymerization reaction vessel.

In accordance with the present invention, an active catalyst complex is produced in situ in the polymerization reaction vessel from a catalyst precursor composition comprising a metallocene and an aluminum alkyl on a support. The aluminum alkyl employed is preferably an aluminum trialkyl such as trimethyl aluminum or triethyl aluminum. In accordance with the present invention, the precursor components for a metallocene/alumoxane catalyst, namely a metallocene and an aluminum alkyl, are charged into the polymerization reaction vessel and an active catalyst complex is produced in situ in the reaction vessel by exposing the aluminum alkyl component to water which is entrained in the monomer supplied to the vessel for polymerization. The procedure of the invention allows for the precise control of the rate of production of alumoxane for the active catalyst complex and thereby eliminates the explosion and fire hazards inherent with the reaction of an aluminum alkyl with water as in the wet solvent method. Further, the method of the invention avoids the production of hazardous waste products which must be separated from the catalyst complex to prevent contamination of the polymer and which must be disposed of as is inherent in the production of alumoxane by treatment of an aluminum alkyl with hydrated salt such as calcium sulfate pentahydrate. The procedure of the invention produces an active catalyst complex required for the polymerization reaction in a much more economical manner in that it eliminates the need to purchase or separately produce alumoxane as such or alternatively to produce alumoxane by procedures and with equipment which are independent of the polymerization reactor itself.

The active catalyst complex produced by the "wet monomer" -- i.e., monomer having entrained water -- process of this invention may be produced as a heterogeneous supported catalyst for slurry or gas phase polymerization. In any case, catalyst activity is controlled by the degree of alumoxane olegomerization resulting from the reaction between the aluminum alkyl in the catalyst complex and the water in the wet monomer feed. A suitable extent of alumoxane olegomerization and, hence, suitable catalyst activity, is obtained with a molar ratio of aluminum alkyl in the catalyst complex to water in the monomer feed of from 1 to 2. A more active catalyst is obtained when the molar ratio of aluminum alkyl to water is from 1.2 to 1.4, preferably from 1.25 to 1.35 and optimum catalyst activity when the molar ratio is 1.3.

Alternatively, a supported heterogeneous form of catalyst complex is produced by supplying to a solvent contained in a reaction vessel a high surface area catalyst support material, and an aluminum alkyl and a metallocene in amounts appropriate to form upon exposure of the aluminum alkyl to water an active metallocene and alumoxane catalyst complex. The metallocene and aluminum alkyl are codeposited on the catalyst support material by adsorption from solution or by evaporation of the solvent from a mixture of catalyst support, metallocene and aluminum alkyl. Thereafter the supported catalyst precursor composition is activated and employed in a slurry polymerization process by supplying said reaction vessel with a

monomer containing water vapor in the amount of from 100 to 10,000 ppm and preferably 1000-8000 until the desired degree of polymerization is attained. Alternatively, the solvent may be evacuated from the vessel and the supported catalyst precursor composition dried to a free-flowing powder which may then be used in a gas phase polymerization process by supplying to the gas phase reactor a monomer containing water vapor in an amount from 100 to 10,000 ppm and preferably 1000-8000. If desired, the dried supported catalyst precursor composition may be charged back into a polymerization solvent for use in a slurry polymerization and activated by supplying to the reaction vessel a monomer containing water vapor in an amount from 100 to 10,000 ppm and preferably 1000-8000. The total amount of water should be sufficient to provide a molar ratio of aluminum alkyl to water of from 1 to 2, preferably from 1.2 to 1.4, and especially 1.3, to attain the desired degree of alumoxane oligomerization.

Since metallocene/alumoxane catalysts have their greatest utility in the production of polyethylene, polypropylene, and polymers of ethylene with alpha-olefin comonomers, the monomer for the "wet monomer" feed will preferably be ethylene or propylene, and most preferably ethylene. The requisite amount of water may be conveniently supplied to the monomer feed stream by passing the monomer through a bed of wet silica before its admission to the reaction vessel. The water content of the monomer feed stream may be conveniently monitored and controlled by controlling the amount of makeup water added to the silica bed and by providing a split stream for adding, as necessary, a controlled amount of dry monomer to the wet monomer feed stream going to the reactor.

By appropriate selection of the type and relative amounts of the metallocene and the aluminum alkyl catalyst precursor, one can attain by the present method the particular active catalyst complex desired for any particular application. For example, higher concentrations of alumoxane in the catalyst system generally result in higher molecular weight polymer product. Therefore, when it is desired to produce a high molecular weight polymer a higher concentration of aluminum alkyl is used, relative to the metallocene, than when it is desired to produce a lower molecular weight material. The ratio of aluminum in the aluminum alkyl to total metal in the metallocene can be in the range of from 0.5 : 1 to 10,000 : 1, and preferably 5 : 1 to 1,000 : 1 and most preferably 5 : 1 to 100 : 1.

The molecular weight of the polymer product can be controlled by the judicious selection of substituents on the cyclopentadienyl ring and use of ligands for the metallocene. Further, the comonomer content can be controlled by the judicious selection of the metallocene. Hence, by the selection of catalyst components it is possible to tailor the polymer product with respect to molecular weight and density. Further, one may tailor the polymerization reaction conditions over a wide range of conditions for the production of polymers having particular properties.

In the examples following, the melt index (MI) and melt index ratio (MIR) were determined in accordance with ASTM test D1238.

Examples 1 to 3

A 125 ml vial containing a magnetic stirring bar was charged with 5.0 grams of silica gel (Davison 948) that had been dehydrated at 800 °C. 125 mg of bis (n-butyl cyclopentadienyl) zirconium dichloride was charged into the vial. Thereafter 30 ml of dried and deoxygenated hexane and a selected amount of trimethylaluminum/heptane solution (1.62 M) was charged into the vial and the resulting mixture was stirred at room temperature for 10 minutes. Thereafter the hexane and heptane solvent were evacuated from the vial and the silica gel, codeposited with $(n\text{-}BuCp)_2ZrCl_2$ and trimethyaluminum, was dried at room temperature to form a free flowing powder. Three such supported catalyst precursor compositions were prepared by respective use of 15, 10 and 5 ml of trimethylaluminum/heptane solution (1.62 M). Each such composition was then used for the gas phase polymerization of ethylene by charging 5.0 grams of the catalyst precursor composition into a vial equipped with a magnetic stirring bar. The vial was then flushed with an ethylene gas containing 1,000 ppm water after which pressure of the wet ethylene feed to the vial was regulated to and maintained at 0.34 bar (5 psig) for the time that polymerization was allowed to proceed at room temperature The results of the polymerization reactions are shown in Table III below.

TABLE III

| Example No. | Amount TMA Solution Used For Catalyst | Reaction Time (hours) | Yield of Polymer (grams) |
|---|---|---|---|
| 1 | 15 ml | 4 | 7.4 |
| 2 | 10 ml | 2 | 5.6 |
| 3 | 5 ml | 2 | 0.1 |

## Claims

1. A process for preparing polymers of ethylene, propylene, or copolymers of ethylene and alpha olefins, by polymerization of a monomer feed in a reaction vessel in the presence of a metallocene-alumoxane catalyst composition which is prepared in situ is said reaction vessel, comprising the steps of :
   (a) supplying said reaction vessel with an aluminum alkyl and a metallocene as a deposit on a catalyst support in amounts appropriate to form, upon exposure of the aluminum alkyl to water, a metallocene-alumoxane catalyst; and
   (b) supplying said reaction vessel with the monomer feed preferably gaseous containing from 100 to 10,000 ppm water vapor at a molar ratio of aluminum alkyl to water of from 1 to 2.

2. A process according to claim 1 in which the metallocene is of the formula : $(Cp)_mMR_nX_q$ wherein Cp is a cyclopentadienyl ring, M is a Group 4b or 5b transition metal, R is a hydrocarbyl group or hydrocarboxy group having from 1 to 20 carbon atoms, X is a halogen, and m is a whole number from 1 to 3, n is a whole number from 0 to 3, and q is a whole number from 0 to 3; $(C_5R'_k)_gR''_s(C_5R'_k)MQ_{3-g}$ or $R''_s(C_5R'_k)_2MQ'$ wherein $(C_5R'_k)$ is a cyclopentadienyl or substituted cyclopentadienyl, each R' is the same or different and is hydrogen or a hydrocarbyl radical containing from 1 to 20 carbon atoms, a silicon-containing hydrocarbyl radical, or a hydrocarbyl radical wherein two carbon atoms are joined together to from a $C_4$-$C_6$ ring, R" is $C_1$-$C_4$ alkylene radical, a dialkyl germanium or silicone, or an alkyl phosphine or amine radical bridging two $(C_5R'_k)$ rings, Q is a hydrocarbyl radical having 1-20 carbon atoms, hydrocarboxy radical having 1-20 carbon atoms or halogen and can be the same or different, Q' is an alkylidene radical having from 1 to 20 carbon atoms, s is 0 or 1, g is 0, 1 or 2; when g is 0, s is 0; k is 4 when S is 1 and k is 5 when s is 0 and M is as defined above; and in which the alumoxane is of the formula $(R\text{-}Al\text{-}O)_y$ for a cyclic alumoxane and $R(R\text{-}Al\text{-}O\text{-})_yAlR_2$ for a linear alumoxane wherein "y" is a number from 2 to 30 and "R" is a $C_{1-5}$ alkyl group.

3. A process according to claim 1 or claim 2 wherein polymerization is performed in a polymerisation solvent as a slurry polymerisation or in the gas phase.

4. A process according to any of the preceding claims wherein R of the alumoxane formula is methyl or ethyl and "y" is a number from 4 to 25 and/or wherein M of the metallocene formula is a Group 4b transition metal.

5. A process according to any of the preceding claims wherein the monomer supplied to said reaction vessel contains water vapor in a concentration of from 1,000 to 8,000 ppm and/or wherein the molar ratio of aluminum alkyl to water is from 1.2 to 1.4.

## Revendications

1. Procédé de production de polymères d'éthylène ou de propylène ou de copolymères d'éthylène et d'alpha-oléfines par polymérisation d'une charge de monomère dans un réacteur en présence d'une composition de catalyseur métallocène-alumoxane qui est préparée in situ dans ledit réacteur, qui comprend les étapes consistant :
   (a) à charger dans le réacteur un aluminium-alkyle et un métallocène à l'état de dépôt sur un support de catalyseur en quantités appropriées pour former, après exposition de l'aluminium-alkyle à l'eau, un catalyseur métallocène-alumoxane ; et
   (b) à faire arriver dans le réacteur une charge de monomère de préférence gazeuse contenant 100 à 10 000 ppm de vapeur d'eau dans un rapport molaire de l'aluminium-alkyle à l'eau de 1 à 2.

2. Procédé suivant la revendication 1, dans lequel le métallocène répond à la formule : $(Cp)_mMR_nX_q$ dans laquelle Cp est un noyau cyclopentadiényle, M est un métal de transition du Groupe 4b ou 5b, R est un groupe hydrocarbyle ou un groupe hydrocarboxy ayant 1 à 20 atomes de carbone, X est un halogène et m est un nombre entier de 1 à 3, n est un nombre entier de 0 à 3 et q est un nombre entier de 0 à 3 ; $(C_5R'_k)_gR''_s(C_5R'_k)MQ_{3-g}$ ou $R''_s(C_5R'_k)_2MQ'$ où $(C_5R'_k)$ est un groupe cyclopentadiényle ou cyclopentadiényle substitué, les radicaux R' sont identiques ou différents et chacun représente l'hydrogène ou un radical hydrocarbyle contenant 1 à 20 atomes de carbone, un radical hydrocarbyle contenant du silicium ou un radical hydrocarbyle dans lequel deux atomes de carbone s'associent pour former un noyau en $C_4$-$C_6$, R" est un radical alkylène en $C_1$ à $C_4$, un dialkyl-germanium ou une silicone, ou un radical alkylphosphine ou amine pontant deux noyaux $(C_5R'_k)$, Q est un radical hydrocarbyle ayant 1 à 20 atomes de carbone, un radical hydrocarboxy ayant 1 à 20 atomes de carbone ou un halogène, des radicaux Q pouvant être identiques ou différents, Q' et un radical alkylidène ayant 1 à 20 atomes de carbone, s a la valeur 0 ou 1, g a la valeur 0, 1 ou 2 ; lorsque g est égal à 0, s est égal à 0 ; k est égal à 4 lorsque s est égal à 1 et k est égal à 5 lorsque s est égal à 0 et M est tel que défini ci-dessus ; et l'alumoxane répond à la formule $(R\text{-}Al\text{-}O)_y$ pour un alumoxane cyclique et à la formule $R(R\text{-}Al\text{-}O\text{-})_yAlR_2$ pour un alumoxane linéaire, "y" étant un nombre de 2 à 30 et "R" étant un groupe en $C_1$ à $C_5$.

3. Procédé suivant la revendication 1 ou la revendication 2, dans lequel la polymérisation est effectuée dans un solvant de polymérisation, comme polymérisation en suspension ou en phase gazeuse.

4. Procédé suivant l'une quelconque des revendications précédentes, dans lequel R dans la formule de l'alumoxane est le groupe méthyle ou éthyle et "y" est un nombre de 4 à 25 et/ou M dans la formule du métallocène est un métal de transition du Groupe 4b.

5. Procédé suivant l'une quelconque des revendications précédentes, dans lequel le monomère introduit dans le réacteur contient de la vapeur d'eau à une concentration de 1000 à 8000 ppm et/ou le rapport molaire de l'aluminium-alkyle à l'eau a une valeur de 1,2 à 1,4.

## Patentansprüche

1. Verfahren zum Herstellen von Polymeren aus Ethylen, Propylen oder Copolymeren aus Ethylen und alpha-Olefinen mittels Polymerisation eines Monomers, mit dem ein Reaktionsgefäß beschickt wird, in Gegenwart einer Metallocen-Alumoxan-Katalysatorverbindung, die in situ in diesem Reaktionsgefäß hergestellt wird, mit folgenden Schritten:
   a) Beschicken des Reaktionsgefäßes mit einem Aluminiumalkyl und einem Metallocen als Sediment auf einem Katalysatorträger in Mengen, die geeignet sind, nachdem das Aluminiumalkyl Wasser ausgesetzt wurde, ein Metallocen-Alumoxan-Katalysator zu bilden; und
   b) Beschicken dieses Reaktionsgefäßes mit dem Monomer vorzugsweise als Gas, das 100 bis 10.000 ppm Wasserdampf bei einem Molverhältnis von Aluminiumalkyl zu Wasser von 1 bis 2 aufweist.

2. Verfahren gemaß Anspruch 1, worin das Metallocen der Formel ist: $(Cp)_mMR_nX_q$, worin Cp ein Cyclopentadienylring, M ein Übergangsmetal der Gruppe 4b oder 5b, R eine Kohlenwasserstoffgruppe oder eine Kohlenwasserstoffoxygruppe, die 1 bis 20 Kohlenstoffatome aufweist, X ein Halogen und m eine ganze Zahl von 1 bis 3, n eine ganze Zahl von 0 bis 3 und q eine ganze Zahl von 0 bis 3 ist;
   $(C_5R'_k)_gR''_s(C_5R'_k)MQ_{3-g}$, oder
   $R''_s(C_5R'_k)_2MQ'$, worin $(C_5R'_k)$ ein Cyclopentadienyl oder ein substituiertes Cyclopentadienyl ist, wobei jedes R' gleich oder verschieden ist und Wasserstoff oder ein Kohlenwasserstoffrest, der 1 bis 20 Kohlenstoffatomen aufweist, ein silikonhaltiger Kohlenwasserstoffrest oder ein Kohlenwasserstoffrest ist, worin zwei Kohlenstoffatome so miteinander verbunden sind, daß sie zusammen einen $C_4$-$C_6$-Ring bilden, R" ein $C_1$-$C_4$-Alkylenrest, ein Dialkylgermanium- oder -silizium-, oder ein Alkylphosphin- oder Aminrest ist, der zwei $(C_5R'_k)$-Ringe verbrückt, Q ein Kohlenwasserstoffrest, der 1 bis 20 Kohlenstoffatome aufweist, ein Kohlenwasserstoffoxyrest, der 1 bis 20 Kohlenstoffatome aufweist oder ein Halogen ist und gleich oder verschieden sein kann, Q'ein Alkylidenrest ist, der 1 bis ungefähr 20 Kohlenstoffatome aufweist; s gleich 0 oder 1 ist, g gleich 0, 1 oder 2 ist; falls g gleich 0 ist, s gleich 0 ist; k gleich 4 ist, falls s gleich 1 ist und k gleich 5 ist, falls s gleich 0 ist und M wie oben definiert ist;
   und in welchem das Alumoxan der Formel $(R\text{-}Al\text{-}O)_y$ für ein cyclisches Alumoxane und R(R-AL-O-

$)_y ALR_2$ für ein lineares Alumoxan ist, worin "y" eine Zahl von 2 bis 30 und "R" eine $C_{1-5}$-Alkylgruppe ist.

**3.** Verfahren gemäß Anspruch 1 oder 2, worin die Polymerisation in einem Polymerisationslösungsmittel als eine Ablagerungsspolymersiation oder in der Gasphase durchgeführt wird.

**4.** Verfahren gemäß einem der vorangehenden Ansprüche, worin das R der Alumoxanformel ein Methyl oder ein Ethyl ist und "y" eine Zahl von 4 bis 25 ist und/oder worin das M in der Formel des Metallocens ein Übergangsmetall der Gruppe 4b ist.

**5.** Verfahren gemäß einem der vorangehenden Ansprüche, worin das Monomer, mit dem das Reaktionsgefäß beschickt wird, Wasserdampf in einer Konzentration von 1.000 bis 8.000 ppm aufweist und/oder das Molverhältnis von Aluminiumalkyl zu Wasser 1,2 bis 1,4 beträgt.